# EUROPEAN PATENT APPLICATION

(11) **EP 4 757 447 A1**
(43) Date of publication of application: **10.06.2026**
(21) Application number: 23947606.2
(22) Date of filing: 01.08.2023
(51) Int. Cl.: H04W 64/00, H04W 16/26, H04W 72/23

(54) **TERMINAL, BASE STATION, AND COMMUNICATION METHOD**

(71) Applicant: NTT DOCOMO, INC., Tokyo 100-6150 (JP)
(72) Inventor: OKAMURA, Masaya, Tokyo 100-6150 (JP); TAKEDA, Daiki, Tokyo 100-6150 (JP); SHIMA, Kousuke, Tokyo 100-6150 (JP); KURITA, Daisuke, Tokyo 100-6150 (JP); ONODA, Takanobu, Tokyo 100-6150 (JP)
(74) Representative: Hoffmann Eitle
(86) International application number: PCT/JP2023/028200
(87) International publication number: WO 2025/027809

(57) **Abstract**

A terminal includes: a transmission and reception unit configured to perform transmission and reception of a reference signal used for positioning via a wireless relay device and to receive information indicating a reflection point at which the wireless relay device reflects the reference signal; and a control unit configured to perform the positioning based on the reflection point in response to reception of the reference signal. The reflection point is associated with a resource of the reference signal.

## Description

### TECHNICAL FIELD

The present invention relates to a terminal, a base station, and a communication method.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In the next generation communication, the high frequency band is expected to be used. From the viewpoint of the reduced number of scatterers, reduced shadowing effects, increased distance-dependent attenuation, or the like, due to the characteristics of the high frequency band, the communication quality is required to be improved. Beam control, environment, and the like, for ensuring the communication quality are expected to be required.

For example, there is a problem of easily created dead zones because of the radio waves' strong tendency of traveling straight in the high frequency band. Accordingly, methods of improving the communication quality under the multi-path environment have been discussed. The methods use a wireless relay device such as a passive repeater or an active type reflector (RIS: Reconfigurable Intelligent Surface), a smart repeater that receives and amplifies a signal to be re-radiated, and the like (for example, Non-Patent Literature 2).

### CITATION LIST

### Non-Patent Literature

Non-Patent Literature 1: 3GPP TS 38.300 V17.5.0
(2023-06) Non-Patent Literature 2: NTT DOCOMO, "White Paper 5G Evolution and 6G" (2021-02, Version 3.0), Internet<URL:https://www.nttdocomo.co.jp/binary/p df/corporate/technology/whitepaper_6g/DOCOMO_6G_W hite_PaperJP_20210203.pdf>

### SUMMARY OF INVENTION

### TECHNICAL PROBLEM

The time difference of signal arrival between the base station and the terminal and the angle of arrival are used in the positioning in the wireless communication system. Therefore, there is a risk that the positioning cannot be performed appropriately when a signal transmitted and received between the base station and the terminal via the RIS. Furthermore, in a scenario that requires a centimeter level of high accuracy positioning, reduction of the positioning measurement error is required.

### SOLUTION TO PROBLEM

A terminal according to an embodiment of the present invention includes: a transmission and reception unit configured to perform transmission and reception of a reference signal used for positioning via a wireless relay device and to receive information indicating a reflection point at which the wireless relay device reflects the reference signal; and a control unit configured to perform the positioning based on the reflection point in response to reception of the reference signal. The reflection point is associated with a resource of the reference signal.

### ADVANTAGEOUS EFFECTS OF INVENTION

According to an embodiment of the present invention, the positioning measurement error using the wireless relay device can be reduced.

### BRIEF DESCRIPTION OF DRAWINGS

[Fig. 1] is a drawing for describing a wireless communication system in an embodiment of the present invention.
[Fig. 2] is a drawing illustrating an example of a functional structure of a base station in an embodiment of the present invention.
[Fig. 3] is a drawing illustrating an example of a functional structure of a terminal in an embodiment of the present invention.
[Fig. 4] is a drawing illustrating an example of a functional structure of a RIS in an embodiment of the present invention.
[Fig. 5] is a drawing illustrating an example of an operation of a RIS in an embodiment of the present invention.
[Fig. 6] is a drawing illustrating an example of communication in the high frequency band.
[Fig. 7] is a drawing illustrating an example of a reflection type RIS in an embodiment of the present invention.
[Fig. 8] is a drawing illustrating an example of a transparent type RIS in an embodiment of the present invention.
[Fig. 9] is a drawing illustrating an example of a wireless communication system, including a base station and a terminal, in which positioning is performed.
[Fig. 10] is a drawing illustrating an example of a wireless communication system, including a base station, a terminal, and a RIS, in which positioning is performed.
[Fig. 11] is a drawing illustrating an expected example of a reference point and a reflection point of the RIS in the first embodiment.
[Fig. 12] is a drawing illustrating an expected example of an offset of the reflection point of the RIS in the first embodiment.
[Fig. 13] is a drawing illustrating an example of a method of determining the reflection point of the RIS in the second embodiment.
[Fig. 14] is a drawing illustrating an example of relationship between RIS spot IDs and a RIS spot reference point in the second embodiment.
[Fig. 15] is a drawing illustrating an example of relationship between RIS spot IDs, the RIS reference point, and a RIS spot offset in the second embodiment.
[Fig. 16] is a drawing illustrating an example of a RIS reflection beam range with respect to the downlink signal in the third embodiment.
[Fig. 17] is a drawing illustrating an example of a method of defining a range of the RIS in the third embodiment.
[Fig. 18] is a drawing illustrating an example of defining the RIS reflection beam range in the first example of the third embodiment.
[Fig. 19] is a drawing illustrating an example of defining the RIS reflection beam range in the second example of the third embodiment.
[Fig. 20] is a drawing illustrating an example of defining the RIS reflection beam range in the third example of the third embodiment.
[Fig. 21] is a drawing illustrating an example of defining a reflection angle at the RIS reflection point in the third embodiment.
[Fig. 22] is a drawing illustrating an example of a hardware structure of the base station, the terminal, or the RIS in an embodiment of the present invention.
[Fig. 23] is a drawing illustrating an example of a structure of a vehicle in an embodiment of the present invention.

### DESCRIPTION OF EMBODIMENTS

Hereinafter, one or more embodiments of the present invention will be described by referring to the drawings. It should be noted that the embodiments described below are examples. Embodiments of the present invention are not limited to the following embodiments.

In an operation of a wireless communication system according to an embodiment the present invention, the conventional techniques will be used appropriately. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

In the embodiments described below, terms that are used in the conventional LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex or the like).

In addition, in an embodiment of the present invention, the expression, a radio parameter is "configured" may mean that a predetermined value is pre-configured, or may mean that a radio parameter indicated by a base station 10 or a terminal 20 is configured.

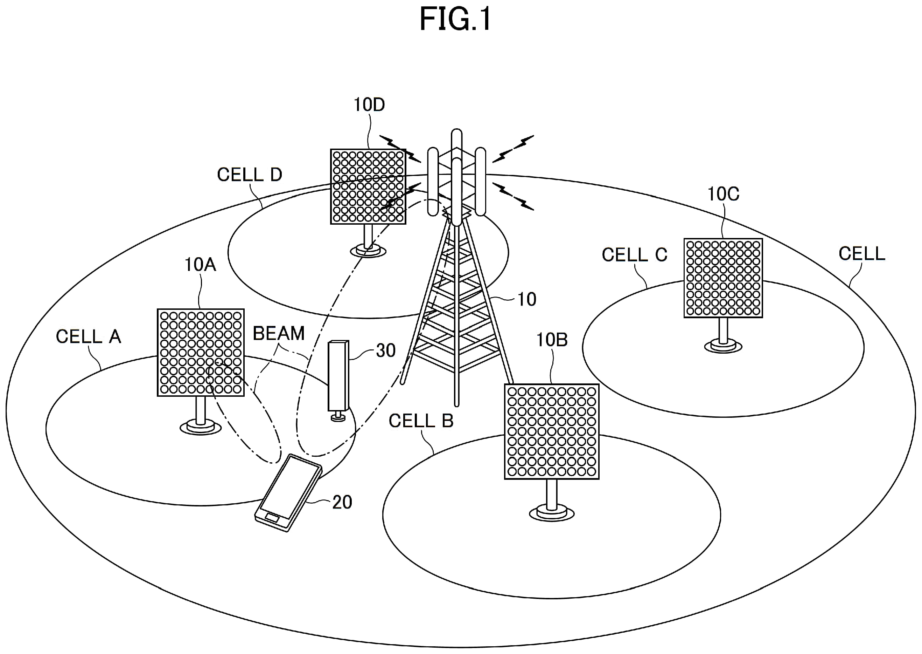

Fig. 1 is a drawing for describing a wireless communication system in an embodiment of the present invention. As illustrated in Fig. 1, a wireless communication system in an embodiment of the present invention includes a base station 10 and a terminal 20. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and/or an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. It is to be noted that the terminal 20 may be referred to as a UE, and the base station 10 may be referred to as a gNB or a TRP (Transmission and Reception Point).

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In addition, in a wireless communication system in an embodiment of the present invention, the base station 10 is a wireless base station deployed in 5G or 6G as an example, and forms a cell. It is to be noted that the cell is a cell of a relatively large size and is referred to as a macro cell.

The base stations 10A to 10D are base stations deployed in 5G or 6G. The base stations 10A to 10D respectively form cells CA to D whose individual sizes are smaller than the macro cell. The cells A to D may be referred to as small cells, macro cells, or the like. As illustrated in Fig. 1, the cells A to D may be formed to be included in the macro cell.

The macro cell may be generally interpreted as an area with a radius of several hundred meters to tens of kilometers covered by a single base station in which communications are available. In addition, the small cell may be interpreted as a generic name of a cell that covers a smaller area compared with the macro cell.

It is to be noted that the base station 10 and the base stations 0A to 10D may be described as a gNodeB (gNB), BS (Base Station), or the like. In addition, the terminal 20 may be described as a UE, MS, or the like. Furthermore, a specific configuration of a wireless communication system including the numbers and types of base stations and terminals is not limited to an example illustrated in Fig. 1.

In addition, the wireless communication system is not necessarily limited to a wireless communication system according to 5G or 6G. For example, the wireless communication system may be a wireless communication system of the next generation of 6G, or may be a wireless communication system according to LTE.

The base station 10 and the base stations 10A to 10D perform wireless communications according to 5G or 6G with the terminal 20, as an example. The base station 10, the base stations 10A to 10D, and the terminal 20 may support: a massive MIMO in which highly directional beams are generated by controlling a wireless signal transmitted from a plurality of antenna elements; a carrier aggregation (CA) in which a plurality of component carriers (CCs) are bundled to be used; a dual connectivity (DC) in which communications are simultaneously performed between the terminal 20 and each of two NG-RAN nodes; an IAB (Integrated Access and Backhaul) in which the wireless backhaul between wireless communication nodes such as gNBs is integrated with the wireless access to the terminal 20; and the like.

In addition, the wireless communication system may also support the high frequency band that is higher than the following frequency ranges (FRs) that are specified in the 3GPP release 15. For example, a band between 410 MHz to 7.125 GHz may be supported as FR1, and a band between 24.25 GHz to 52.6 GHz may be supported as FR2. Furthermore, the wireless communication system may support a frequency band that is higher than 52.6 GHz up to 114.25 GHz. The frequency band may be referred to as a millimeter wave band.

Here, the base station 10 that supports the massive MIMO can transmit beams. In general, the massive MIMO means a MIMO communication in which an antenna with more than 100 antenna elements is used and enables a wireless communication faster than the conventional wireless communication according to the multiplexing effects of a plurality of streams. In addition, advanced beamforming is also available. The beam width can be dynamically changed in accordance with the used frequency band, the state of the terminal 20, etc. In addition, the increased reception signal power can be achieved according to the beamforming gain obtained by using narrower beams. Furthermore, good effects such as reduced interference generation and effective utilization of wireless resources are expected.

In addition, the wireless communication system may include a RIS (Reconfigurable Intelligent Surface) 30. In an embodiment of the present invention, the RIS 30 is an example of a wireless relay device. The wireless relay device may be a reflector, a metamaterial function device, a power saving device (Battery less device), a phase control reflector, a passive repeater, an IRS (Intelligent Reflecting Surface), a smart repeater, or a network controlled repeater. As a specific example, the reflector (RIS) may be a metamaterial reflector, a dynamic meta surface, a meta surface lens, or the like (for example, Non-Patent Literature 2).

In an embodiment of the present invention, the RIS 30 relays a wireless signal transmitted from a base station 10A, for example. In the description of an embodiment of the present invention, "relay" may mean at least one of "reflect", "transparently transmit", "aggregate (focusing the radio waves substantially at one point)", or "diffract". The terminal 20 can receive a wireless signal relayed by the RIS 30. In addition, the RIS 30 may relay a wireless signal transmitted from the terminal 20 or may relay a wireless signal transmitted from the base station 10.

As an example, the RIS 30 can change the phase of a wireless signal to be relayed to the terminal 20. From the above-described viewpoint, the RIS 30 may be referred to as a phase variable reflector. It is to be noted that, in an embodiment of the present invention, the RIS 30 may be, but is not limited to, a device having a function of changing the phase of a wireless signal to be relayed. In addition, the RIS 30 may be referred to as a RIS, repeater, relay device, reflection array, transmission array, or the like.

In addition, in an embodiment of the present invention, the RIS 30 may be defined to have functions described in the following 1) to 5).

1) May have a function of receiving a signal transmitted from the base station 10. The signal may be a DL signal such as an SSB (SS/PBCH block), PDCCH, PDSCH, DM-RS (Demodulation Reference Signal), PT-RS (Phase Tracking Reference Signal), CSI-RS (Channel Status Information Reference Signal), RIS dedicated signal, or the like. The RIS 30 may have a function of receiving a signal carrying information related to a meta-material function. It is to be noted that the device may have a function of transmitting the signal to the terminal 20.
2) May have a function of transmitting a signal to the base station 10. The signal may be a UL signal such as a PRACH, PUCCH, PUSCH, DM-RS, PT-RS, SRS, RIS dedicated signal, or the like. The RIS 30 may have a function of transmitting information related to a meta-material function. It is to be noted that the device may have a function of receiving the signal from the terminal 20.
3) May have a function of frame synchronization with the base station 10. It is to be noted that the device may have a function of frame synchronization with the terminal 20.
4) May have a function of reflecting a signal transmitted from the base station 10 or the terminal 20. For example, the reflecting function may be a function related to the phase change, or a function related to beam control (for example, a function related to control of TCI (Transmission Configuration Indication) - state, or QCL (Quasi Co Location), selection and application of beams, and selection and application of spatial filters/precoding weights).
5) The device may have a function of changing power of a signal transmitted from the base station 10 or the terminal 20. For example, the function of changing power may be power amplification.

In addition, "receive to transmit" or "relay" in the RIS 30 including a RIS, smart repeater, or the like, may mean to perform transmission including the function A described below but not including the function B described below.
Function A: Applying a phase shifter.
Function B: Not passing through a compensation circuit (for example, amplifying, filtering).

As a different example,
Function A: Applying a phase shifter and compensation circuit.
Function B: Not including frequency conversion.

It is to be noted that the amplitude may be amplified when the phase is changed in the RIS 30. In addition, "relaying" in the RIS 30, or the like, may mean transmitting a received signal as it is without performing a process of layer 2 or layer 3 level, may mean transmitting a received signal as it is in the physical layer level, or may mean transmitting a received signal as it is without interpreting the signal (changing the phase or amplifying the amplitude may be performed).

### (Device configuration)

Next, examples of functional configurations of the base station 10, the terminal 20, and the RIS 30 that perform processing and operations in an embodiment of the present invention will be described. The base station 10, the terminal 20, and the RIS 30 include functions of performing embodiments to be described below. With respect to the above, each of the base station 10, the terminal 20, and the RIS 30 may include only one function among the embodiments.

### <Base station 10>

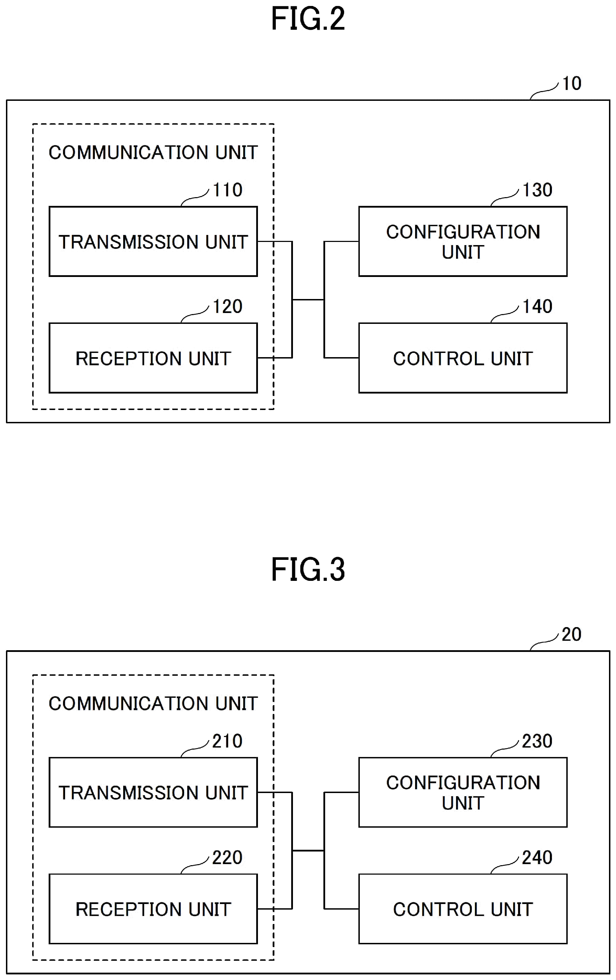

Fig. 2 is a drawing illustrating an example of a functional structure of a base station in an embodiment of the present invention. As shown in Fig. 2, the base station 10 includes a transmission unit 110, a reception unit 120, a configuration unit 130, and a control unit 140. The functional configuration illustrated in Fig. 2 is merely an example. Functional divisions and names of functional units may be any division and name as long as operations related to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, DL data, and the like to the terminal 20. In addition, the transmission unit 110 transmits configuration information, or the like, described in the embodiments.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 3 is drawing illustrating an example of a functional structure of a terminal in an embodiment of the present invention. As shown in Fig. 3, the terminal 20 includes a transmission unit 210, a reception unit 220, a configuration unit 230, and a control unit 240. The functional configuration illustrated in Fig. 3 is merely an example. Functional divisions and names of functional units may be any division and name as long as operations related to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the transmission unit 210 transmits a HARQ-ACK, and the reception unit 220 receives configuration information described in an embodiment of the present invention.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### <RIS 30>

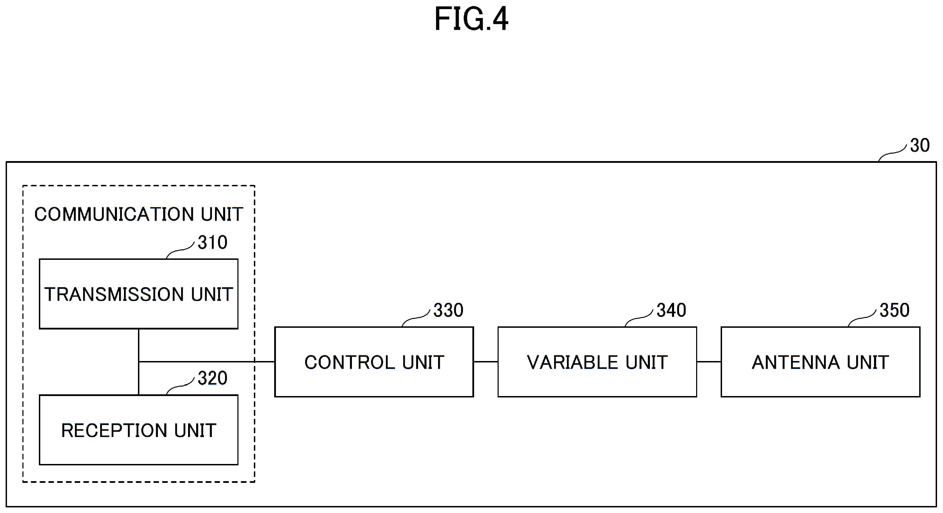

Fig. 4 is drawing illustrating an example of a functional structure in an embodiment of the present invention. As shown in Fig. 4, the RIS 30 includes a transmission unit 310, a reception unit 320, a control unit 330, a variable unit 340, and an antenna unit 350. Functional divisions and names of functional units may be any division and name as long as operations related to an embodiment of the present invention can be performed. The transmission unit 310 and the reception unit 320 may be referred to as a communication unit.

The antenna unit 350 includes at least one antenna that is connected to the variable unit 340. For example, the antenna unit 350 may be arranged as an array antenna. In an embodiment of the present invention, the antenna unit 350 may be specifically referred to as a relay antenna. It is to be noted that the variable unit 340 and the antenna unit 350 may be referred to as a relay unit.

The variable unit 340 is connected to the antenna unit 350, and is capable of changing the phase, load, amplitude, or the like. For example, the variable unit 340 may be a variable phase shifter, a phase shifter, an amplifier, or the like. For example, the direction of the radio waves or beams can be changed by changing the phase of the radio waves transmitted from the generation source of the radio waves to the relay antenna.

The control unit 330 is a control means for controlling the variable unit 340. In an embodiment of the present invention, the control unit 330 functions as a control unit for controlling the relaying states at the time when relaying radio waves received from the base station 10 or the terminal 20 without signal interpretation. Here, the control unit 330 may change the relaying state based on the control information received from the base station 10 or the terminal 20 via the communication unit, or may change the relaying state based on the reception state of the radio waves received from the base station 10 or the terminal 20. For example, the control unit 330 may select appropriate (directions of) reception beam and transmission beam and may control the variable unit 340, based on the control information such as an SSB, or the like. Similarly, the control unit 330 may select an appropriate combination of reception direction and transmission direction, according to the reception state, based on the criteria such as the best reception quality or the largest reception power and may control the variable unit 340.

In addition, in an embodiment of the present invention, the control unit 330 can control the variable unit 340, based on, for example, the information related to the propagation path between the terminal 20 or the base station 10A and the antenna unit 350 (hereinafter, including information estimated from the reception state and the control information). For example, the control unit 330 can relay the radio waves received from the base station 10A towards a specific direction of the recipient of the radio waves (in this case, the terminal 20) by using a known method including an active repeater, RIS, or the like, to change the phase without using the transmission power. Specifically, the control unit 330 controls the phase of the wireless signal to be relayed towards the terminal 20 or the base station 10A, based on the estimated propagation path information, HPT and HRP. In other words, according to the same principle as the beamforming, etc., the radio waves can be relayed towards a specific direction by changing the phase of the array antenna, etc. It is to be noted that the RIS 30 only controls (changes) the phase of the wireless signal (radio waves) via the control unit 330, and thus, may perform the relaying without a power supply and without performing the power amplification of the wireless signal to be relayed.

In addition, the control unit 330 may obtain the information according to the reception state in an embodiment of the present invention. In addition, the reception unit 320 may obtain control information from the base station 10A or the terminal 20. For example, the reception unit 320 may receive, as the control information, various signals including SSB (including various signals described as an example in the above-described functions) transmitted from the base station 10A or the terminal 20.

In addition, the control unit 330 may estimate the propagation path information (HPT and HRP) between the generation source of the radio waves (for example, the base station 10A or the terminal 20) and the antenna unit 350, based on the reception state (for example, the change of the reception power, or the like) at the time of controlling the variable unit 340.

The propagation path information related to each propagation path (propagation channel information) is specifically information of amplitude or phase and is estimated information with respect to the propagation path of the radio waves arriving at the antenna unit 350 in an embodiment of the present invention. As an example, according to the same principle as the I/Q (In-phase/Quadrature) detection, the control unit 330 may estimate the propagation path information of the antenna unit 350, based on the change of the reception power at the time when the phase of the variable unit 340 of the array-shaped antenna unit 350 is orthogonally switched.

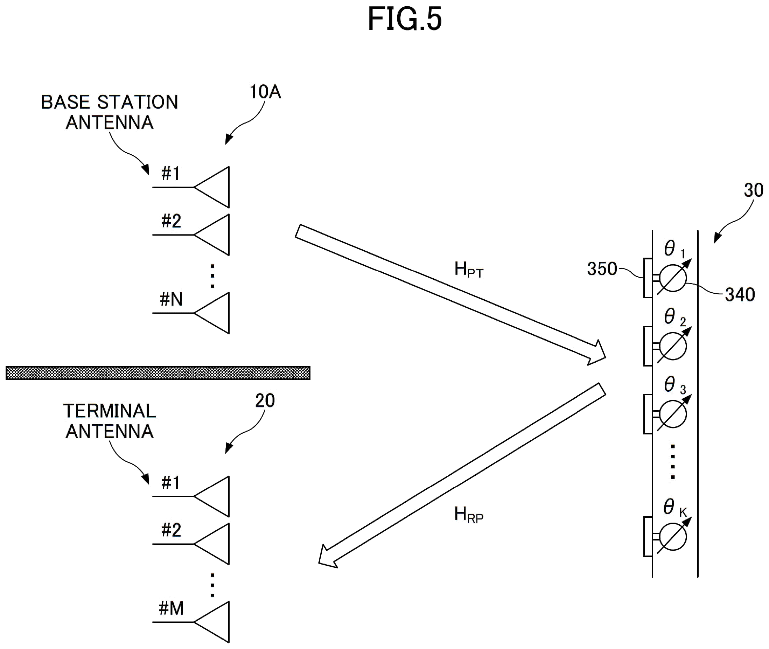

Fig. 5 is a drawing illustrating an example of an operation of a RIS 30 in an embodiment of the present invention. As illustrated in Fig. 5, as an example, the RIS 30 is located between the base station 10A (may be another base station 10, or the like) and the terminal 20, and relays (reflects, transparently transmits, collects, diffracts) a wireless signal transmitted and received between the base station 10A and the terminal 20.

As a specific example, in a case where the wireless quality is good, the base station 10A and the terminal 20 directly transmit and receive a wireless signal without involving the RIS 30. On the other hand, in a case where the wireless quality is degraded, for example, where there is an obstruction between the base station 10A and the terminal 20, the RIS 30 relays a wireless signal transmitted and received between the base station 10A and the terminal 20.

Specifically, the RIS 30 estimates the propagation path information, HPT and HRT, between the generation source such as the base station 10A or the terminal 20 and the relay antenna, based on the change of the reception power at the time of controlling the variable unit 340 such as a variable phase shifter. In addition, the RIS 30 relays a wireless signal towards the recipient of the radio waves such as the terminal 20, by controlling the variable unit 340 such as a variable phase shifter, based on the estimated propagation path information. It is to be noted that the RIS 30 may relay a wireless signal towards the recipient of the radio waves such as the base station 10A or the terminal 20 by controlling the variable unit 340 such as a variable phase shifter based on the control information received from the base station 10A or the terminal 20 without limiting the case to a case of estimating the propagation path information, HPT and HRT.

Here, the propagation path or the propagation channel is each of the communication paths of the wireless communication, and is a communication path between each of the transmission antennas and each of the reception antennas (for example, base station antennas and terminal antennas in the figure).

As an example, the RIS 30 includes: an antenna unit 350 including a small multi-element antenna corresponding to the massive MIMO; and a variable unit 340 including a variable phase shifter or a phase shifter that changes the phase of a wireless signal, which is substantially the radio waves, to a specific phase, and controls the phase of the radio waves to be relayed towards the terminal 20 or the base station 10A by using the variable unit 340.

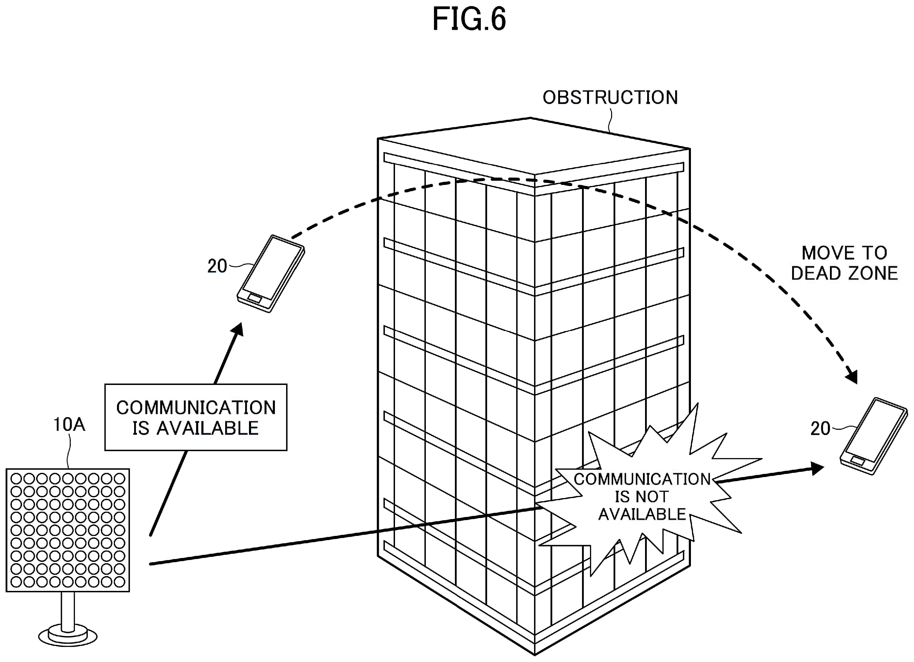

Fig. 6 is a drawing illustrating an example of a communication in the high frequency band. As illustrated in Fig. 6, in a case of using the high frequency band that is equal to or higher than several GHz to several tens of GHz, dead zones are easily created because of the radio waves' strong tendency of traveling straight. If the line of sight between the base station 10A and the terminal 20 is not blocked, the wireless communication between the base station 10A and the terminal 20 is not affected even in a case where the high frequency band is used. On the other hand, for example, if the line of sight between the base station 10A and the terminal 20 is blocked by an obstruction such as a building or a tree, the wireless quality is significantly degraded. In other words, when the terminal 20 moves to a dead zone in which the line of sight is blocked by an obstruction, the communication can be interrupted.

Considering the fact that there is an application that utilizes high data rate/high capacity and low latency characteristics, it is important to resolve the dead zones to ensure the connection between the base station and the terminal without a communication interruption within the wireless communication system.

Accordingly, technologies of the radio wave propagation control device such as an RIS or smart repeater that can relay the radio waves between the base station 10A and the terminal 20 are being developed. In this way, communication characteristics can be improved by controlling the propagation characteristics of the base station signals, and thus, the coverage enhancement without using a signal source and the reduction of the installation and deployment cost due to the addition of base stations can be achieved.

Conventionally, there are a passive type and an active type in the radio wave propagation control device. The passive type has an advantage of not requiring control information, but is not capable of following the mobile body, environment change, or the like. On the other hand, the active type has a disadvantage of increased overhead requiring the control information, but has an advantage of capable of variably controlling the propagation characteristics of the radio waves by changing the load (phase) state of the control antennas and capable of following the mobile body, environment change, etc.

There are two types including a feedback (FB) type and a propagation path information type in the active type radio wave propagation control device and control method. In the FB type, the variable type radio wave propagation control device searches an optimal condition by causing the terminal 20, or the like, to perform feedback of the communication state when the load (phase) state is randomly changed. On the other hand, in the propagation path information type, the optimal radio wave propagation control can be performed by determining the load state based on the propagation path information between the base station and the radio wave propagation control device. In an embodiment of the present invention, either type can be applied.

In addition, with respect to the relay method, there are types of reflection, transparent transmission, diffraction, collection, etc. In an embodiment of the present invention, as an example, configuration examples of a reflection type and a transparent type will be described below (refer to Non-Patent Literature 2 with respect to the diffraction type and the collection type).

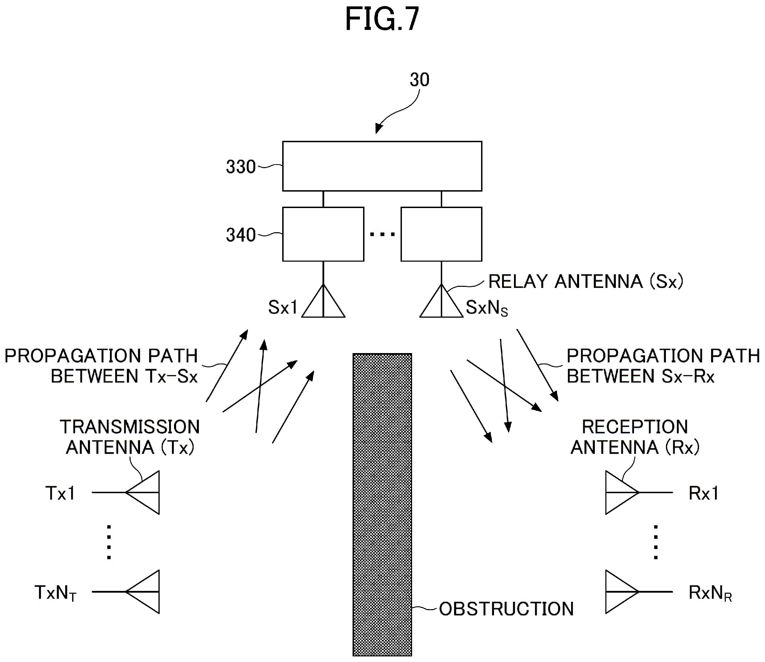

Fig. 7 is a drawing illustrating an example of a reflection type RIS in an embodiment of the present invention. Fig. 7 will be used for describing an example of a system structure of a reflection type RIS 30. Fig. 7 is a drawing illustrating relationships among the transmission antenna Tx of the base station 10A or the like, the relay antenna Sx of the transparent type RIS 30, and the reception antenna Rx of the terminal 20 or the like. As illustrated in Fig. 7, in an embodiment of the present invention, MIMO is used as an example, there are multiple propagation paths between Tx and Sx and multiple propagation paths between Sx and Rx, and the RIS 30 relays the radio waves by controlling the variable unit 340 that includes a variable phase shifter of the relay antenna Sx, or the like.

As illustrated in Fig. 7, in a case of the reflection type, the array-shaped relay antenna is arranged in a manner in which antennas face the same direction. According to the above, propagation paths of the relay antenna can be estimated based on the reception states that are observed when multiple phase conditions of the relay antenna are changed.

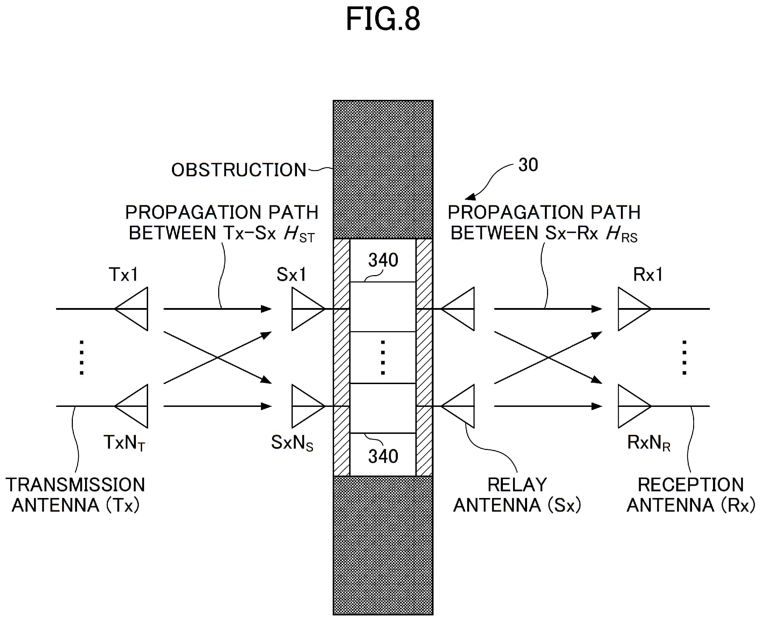

Fig. 8 is a drawing illustrating an example of a transparent type RIS in an embodiment of the present invention. Fig. 8 will be used for describing an example of a system structure of a transparent type RIS 30. Fig. 8 is a drawing illustrating relationships among the transmission antenna Tx of the base station 10A or the like, the relay antenna Sx of the transparent type RIS 30, and the reception antenna Rx of the terminal 20 or the like. As illustrated in Fig. 8, in an embodiment of the present invention, MIMO is used as an example, there are multiple propagation paths between Tx and Sx and multiple propagation paths between Sx and Rx, and the RIS 30 relays the radio waves received from one side to the other side via the variable unit 340 of the relay antenna Sx such as a variable phase shifter as illustrated in the figure. As described above, in a case of the transparent type, reference antennas on the left side of the figure and relay antennas on the right side of the figure are arranged as pairs respectively facing the opposite directions in a manner in which the radio waves received from one side can be relayed to the other side. Regardless of whether the relay is the transparent type or the reflection type, the reception state may be measured by detecting the power arrived at the relay antennas by using the power detection device, or the like. In addition, propagation paths of the relay antennas can be estimated based on the reception signals that are observed when multiple phase conditions of the relay antennas are changed.

For example, in the future network such as 6G, even higher quality is required as compared with 5G. For example, ultra-high-speed communication on the order of tera-bps, high reliability and low latency on par with fiber-optic communication, and the like, are required. In order to achieve the above-described quality, the utilization of very high frequencies, for example, tera-Hz waves is expected. For example, in a case of using the very high frequencies such as tera-Hz waves, while there are advantages of the faster speed by utilization of ultra-wide band and the lower latency by utilization of shorter symbol length, disadvantages of the narrower coverage due to the larger attenuation rate, and the reduced reliability due to the higher tendency of traveling straight are expected. Discussions are required on how to provide redundancy to each point for which 6G communications are required, that is, how to increase the number of transmission points of the communication.

As described above, the RIS 30 reflects or transparently transmits a beam transmitted from the base station 10 or the terminal 20 in a predetermined direction to be transmitted to the terminal 20 or the base station 10. The RIS 30 may be, for example, a passive type RIS, an active type RIS, or the like. The passive type RIS is a device that does not change the control of the reflection angle, beam width, or the like, in accordance with the position of the mobile station, and thus, control information is not required but the precise beam control is difficult. The active type RIS is a device that changes the control of the reflection angle, beam width, or the like, in accordance with the position of the mobile station, and thus, the precise beam control is available but control information is required and the overhead increases. The number of transmission points of communications can be increased by the RIS 30.

The RIS 30 may be a device with a predetermined function, and the predetermined function may be at least one of 1) or 2) described below, for example.

### 1) UE function

The RIS 30 may have a reception function of receiving a signal transmitted from the base station 10 (for example, a DL signal, SSB, PDCCH, PDSCH, DM-RS, PT-RS, CSI-RS, or RIS dedicated signal). According to the above-described reception function, information related to the meta-material function described in 2) below may be received by the RIS 30.

In addition, the RIS 30 may have a transmission function of transmitting a signal to the base station 10 (for example, a UL signal, PRACH, PUCCH, PUSCH, DM-RS, PT-RS, SRS, or RIS dedicated signal). According to the above-described transmission function, information related to the meta-material function described in 2) below may be transmitted by the RIS 30. In addition, the RIS 30 may have a function of frame synchronization with the base station 10.

### 2) Meta-material function

The RIS 30 may have a function of reflecting a signal transmitted from the base station 10 or the terminal 20 (for example, a phase change). The signal reflection may be performed by the RIS 30 by performing phase change by each of a plurality of reflecting elements included in the RIS 30, or the signal reflection may be performed by the RIS 30 by performing the common phase change by the plurality of reflecting elements.

In addition, the RIS 30 may have a function related to beam control (for example, a function related to control of TCI-state or QCL, beam selection and application, spatial filter/precoding weight selection and application). The RIS 30 may have a function of changing power of a signal transmitted from the base station 10 or the terminal 20 (for example, power amplification). With respect to the RIS 30, each of the reflecting elements included in the RIS 30 may perform different power change, or the plurality of reflecting elements may perform common power change.

"Receive to transmit" by the RIS 30 may mean to reflect radio waves/signal. Hereinafter, the terms of "base station" and "terminal" will be used. However, the terms are not limited to "base station" and "terminal", and may be replaced with a communication device.

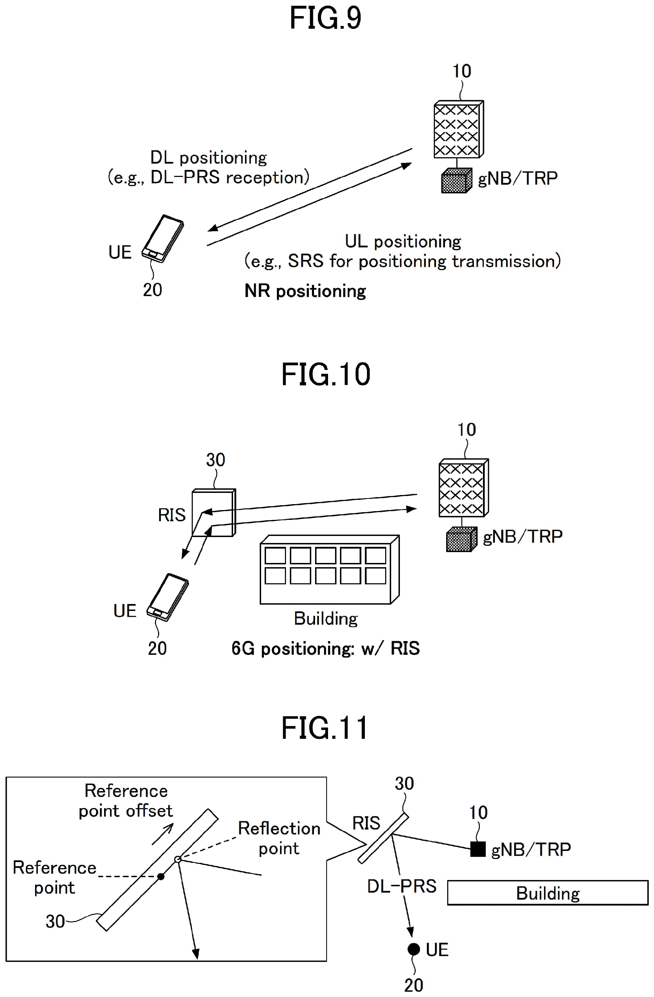

In the next generation network (for example, 6G), a scenario of using the wireless relay device (for example, RIS) in order to expand the coverage. Fig. 9 illustrates an example of a wireless communication system, including a base station 10 and a terminal 20, in which NR positioning is performed. In the wireless communication system illustrated in Fig. 9, the terminal 20 receives a downlink positioning reference signal (DL-Positioning Reference Signal (PRS)) from the base station 10 for the sake of downlink positioning (DL positioning). The terminal 20 transmits an SRS for positioning to the base station 10 for the sake of uplink positioning. The SRS for positioning may be referred to as an SRS-pos.

Fig. 10 illustrates an example of a wireless communication system, including a base station 10, a terminal 20, and a RIS 30, in which NR positioning is performed. In an example illustrated in Fig. 10, the terminal 20 receives a DL-PRS from the base station 10 via the RIS 30, and transmits an SRS for positioning to the base station 10 via the RIS 30.

The time difference of signal arrival between the base station 10 and the terminal 20 and the angle of arrival are used in the NR positioning. Therefore, in the wireless communication system illustrated in Fig. 10, the positioning may not be performed appropriately when a signal is transmitted and received between the base station 10 and the terminal 20 via the RIS 30. For example, in a scenario that requires a centimeter level of high accuracy positioning, reduction of the positioning measurement error is required.

According to an embodiment of the present invention, high-precision positioning using the RIS 30 is implemented by reducing the measurement error in the positioning using the RIS 30. An embodiment of the present invention provides a method of appropriately estimating the reflection point of a signal (for example, PRS) on the RIS 30. The following methods described in the first embodiment to the fourth embodiment may be independently performed or may be combined to be performed.

### (First embodiment)

According to the first embodiment, the terminal 20 may expect that the reflection point information related to the reflection point of the RIS 30 is to be indicated to the terminal 20.

For example, the terminal 20 may expect that the reflection point that is associated with the DL-PRS/SRS-pos resource (set) ID is to be configured. The information associated with the reflection point may be associated with the beam ID, the panel ID, or the RIS ID, for example.

For example, the terminal 20 may expect that at least one of a RIS reference point (for example, [latitude/longitude/altitude]), a RIS horizontal/vertical tilt angle (for example, [degree]), or an offset value (reference point offset) between the RIS reference point and the reflection point is to be indicated.

Fig. 11 is an expected example of the RIS reference point and the reflection point. As illustrated in Fig. 11, for example, the reflection point may be determined based on an offset value from the RIS reference point.

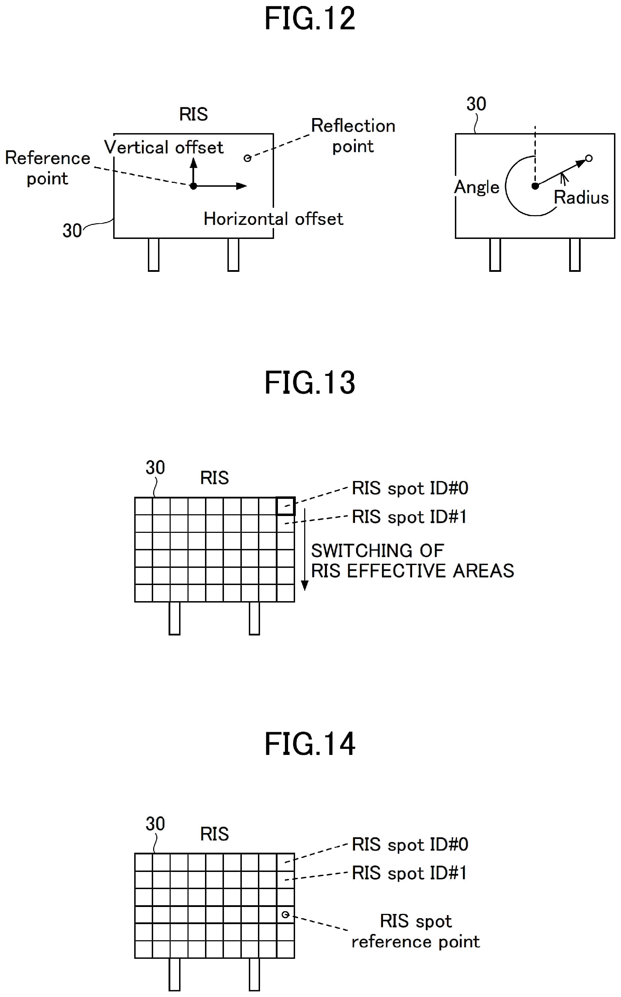

For example, the offset value from the reference point may be defined by using a unit of distance such as [m] or [cm]. The offset value from the reference point may include an offset value in the horizontal direction (horizontal offset) and an offset value in the vertical direction (vertical offset). As illustrated on the left side of Fig. 12, the reflection point may be determined based on an offset value from the reference point in the horizontal direction and an offset value from the reference point in the vertical direction.

For example, the offset value from the reference point may be defined by using a unit of distance such as [m] or [cm] and by using a unit of angle such as [degree]. The offset value from the reference point may include a radius from the reference point and an angle relative to the reference line that goes through the reference point. As illustrated on the right side of Fig. 12, the reflection point may be determined based on an offset value of a radius from the reference point and an offset angle relative to the reference line that goes through the reference point.

In the first embodiment, the terminal 20 may request the network (for example, the base station 10) to indicate and update the RIS reflection point information.

According to the first embodiment, in a case where the RIS 30 has a reflection point estimation function, the coordinates (position) of the reflection point of the RIS 30 can be dynamically obtained based on the reflection beam while preventing an increase in complexity of the base station 10 and the terminal 20. As a result, the method of the first embodiment can increase the accuracy of positioning using the RIS 30.

### (Second embodiment)

According to the second embodiment, the terminal 20 determines the RIS reflection point based on the PRS measurement/transmission.

For example, the terminal 20 may expect that the RIS effective area information indicating the RIS effective areas is to be indicated to the terminal 20 and that repeated execution of measurement of the same DL-PRS resource (set) IDs is to be configured by the network. The RIS effective areas are, for example, predetermined areas on the RIS 30 used for reflecting signals.

For example, the terminal 20 may expect that the RIS effective area information is to be indicated to the terminal 20 and that repeated transmission of the same SRS-pos resource (set) IDs is to be configured by the network.

The RIS effective area information may include RIS spot IDs, for example. As illustrated in Fig. 13, RIS spots are spots obtained by dividing the surface of the RIS 30. A RIS spot ID is an ID used for identifying each spot. For example, the terminal 20 may determine the most appropriate RIS spot (that is, the RIS reflection point) by switching the RIS spots while the terminal 20 repeatedly perform measurement with respect to the same DL-PRS resources (set). For example, the terminal 20 may determine the spot that has the best quality (for example, that has the highest reception power (RSRP (Reference Signal Received Power)) as the RIS reflection point, based on the measurement results.

The RIS spot may be referred to as a RIS panel or a RIS block. The RIS spot may be indicated by coordinates.

The terminal 20 determines the RIS effective areas based on the received RIS effective area information.

The RIS effective area information may include information indicating the RIS spot IDs and a RIS spot reference point, for example. As illustrated in Fig. 14, the RIS effective areas may be determined based on the RIS spot reference point and the RIS spot IDs.

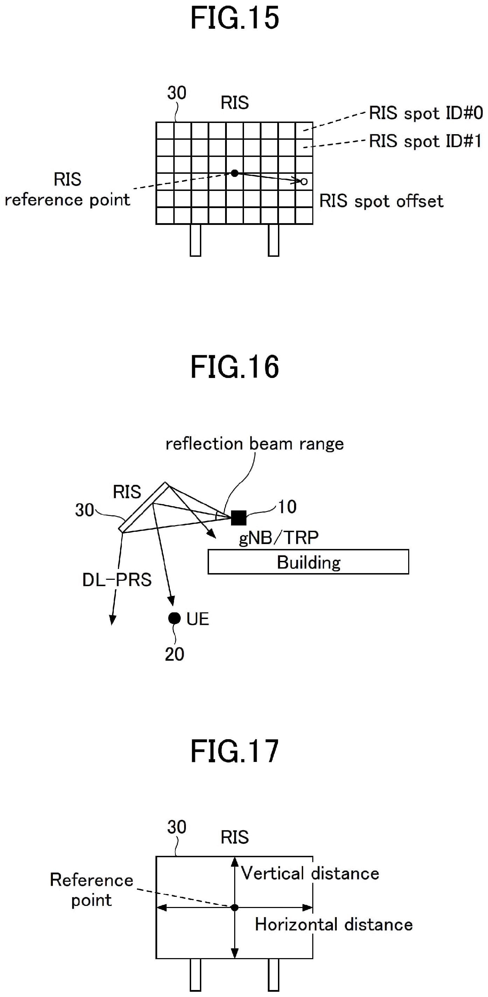

The RIS effective area information may include the RIS spot IDs, the RIS spot reference point, and offset values (RIS spot offsets) between the reference point and the RIS spots (that is, reflection points), for example. As illustrated in Fig. 15, the RIS effective areas may be determined based on the RIS spot reference point, the RIS spot offset values, and the RIS spot IDs.

According to the second embodiment, even in a case where the RIS 30 does not have a reflection point estimation function, the coordinates of the RIS reflection points can be obtained, and thus, the accuracy of the positioning via the RIS can be improved.

### (Third embodiment)

According to the third embodiment, the terminal 20 may determine a reflection beam range of the RIS 30, based on the PRS measurement and/or the PRS transmission.

The reflection beam range of the RIS 30 is a range of beams that can be reflected on the RIS 30. Fig. 16 illustrates an example of a range in which DL-PRS transmitted from the base station 10 is reflected by the RIS 30. In an example of Fig. 16, the reflection beam range of the RIS 30 is a range from a DL-PRS transmitted from the base station 10 onto one end of the surface of the RIS 30 to a DL-PRS transmitted from the base station 10 onto the other end of the surface of the RIS 30. In this embodiment, the reflection beam range is not limited to an example of Fig. 16, and may be a predetermined range in which the RIS 30 can perform reflection. The reflection beam range of the RIS 30 with respect to the uplink signals (for example, SRSs for positioning) is, for example, a range from an SRS for positioning transmitted from the terminal 20 onto one part (for example, one end) of the surface of the RIS 30 to an SRS for positioning transmitted from the terminal 20 onto another part (for example, the other end) of the surface of the RIS 30.

The reflection beam range of the RIS 30 may be defined by using a beam angle at which reflection can be performed on the RIS 30.

For example, the terminal 20 may expect that the reflection beam range of the RIS 30 is to be determined based on the DL-PRS beam sweeping. The terminal 20 may perform DL-PRS measurement for each of the DL-PRSs transmitted by the DL-PRS beam sweeping and may determine the reflection beam range based on the measurement result. The DL-PRS measurement results include, for example, DL-PRS RSRP and/or LOS (Line-Of-Sight) /NLOS (Non LOS) probability.

For example, the terminal 20 may expect that the reflection beam range of the RIS 30 is to be determined based on the SRS-pos beam sweeping (SRS-pos transmissions).

For example, the terminal 20 may expect that RIS information used for determination of the reflection beam range is to be indicated by the network (for example, the base station 10) by using assistant data.

For example, the RIS information may include information for defining the range of the RIS 30. The information for defining the range of the RIS 30 is, for example, the horizontal distance and the vertical distance of the surface of the RIS 30. The horizontal distance and the vertical distance of the surface of the RIS 30 are represented by using a unit of distance (for example, [m] or [cm]).

The information for defining the range of the RIS 30 may include information indicating the reference point on the surface of the RIS 30 in addition to the horizontal distance and the vertical distance of the surface of the RIS 30, for example, as illustrated in Fig. 17. For example, the horizontal distance and the vertical distance of the surface of the RIS 30 may be represented as distances from the reference point.

The information for defining the range of the RIS 30 may be, for example, coordinates that define the surface of the RIS 30. The coordinates may be coordinates of the upper end, the lower end, the left end, and the right end of the surface of the RIS 30, or may be coordinates indicating predetermined positions that define the surface of the RIS 30. The coordinates may be indicated by the latitude, longitude, and altitude.

For example, the RIS information may include information indicating the reference point and the reflection beam range of the RIS 30. The reflection beam range may be defined by using an angle and/or DL-PRS/SRS-pos resource (set) IDs. The DL-PRS/SRS-pos resource (set) IDs may be beam IDs.

As a first example, the reflection beam range of the RIS 30 may be defined by using the angle width of the angle of departure (AoD) or the angle of arrival (AoA) at the base station 10 or the terminal 20.

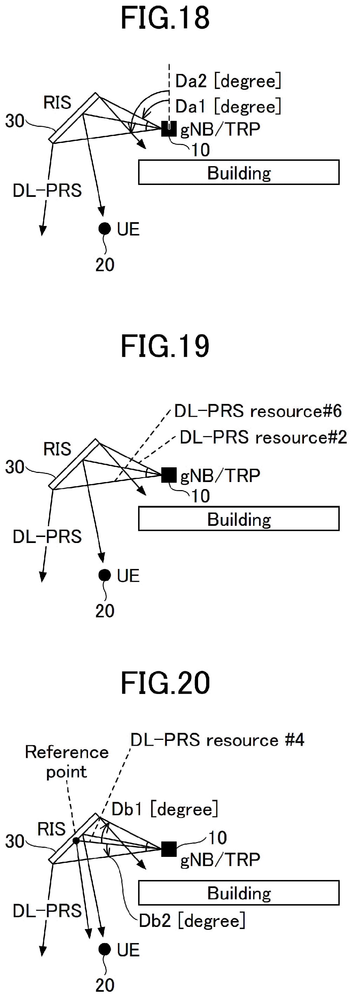

In the first example of defining the reflection beam range, the reflection beam range of the RIS 30 for the downlink may be defined by using the angle width of the angle of departure at the base station 10 or the angle of arrival at the terminal 20. Fig. 18 illustrates an example in which the reflection beam range of the RIS 30 for the downlink is defined by difference between the angle of departure Da1 [degrees] and the angle of departure Da2 [degrees] at the base station 10. The reference direction for the angle of departure may be uniquely defined by the direction such as "north" or "south", or may be defined as a direction specific to each base station 10.

In the first example, the reflection beam range of the RIS 30 for the uplink may be defined by using the angle width of the angle of arrival at the base station 10 or the angle of departure at the terminal 20.

As a modified example of the first example, the reflection beam range of the RIS 30 may be defined by using the width of angles for reflecting the downlink signal (for example, DL-PRS) or the uplink signal (for example, SRS-pos) at the RIS 30.

As a second example of defining the reflection beam range, the reflection beam range of the RIS 30 may be defined based on the DL-PRS/SRS-pos resource IDs. Fig. 19 illustrates an example in which the reflection beam range of the RIS 30 is defined by DL-PRS resource#2 and DL-PRS resource#6.

As a third example of defining the reflection beam range, the reflection beam range of the RIS 30 may be defined based on the reference point and the DL-PRS/SRS-pos resource IDs. In the third example, the reflection beam range of the RIS 30 is defined as angles for DL-PRS/SRS-pos resource IDs that are associated with the reference point. In an example illustrated in Fig. 20, the reflection beam range of the RIS 30 is defined by a range based on the angle Db1 [degrees] for DL-PRS resource#4 that is associated with the reference point and a range based on the angle Db2 [degrees] for DL-PRS resource#4.

In the third embodiment, the RIS involving probability may be determined based on the PRS measurement results. The RIS involving probability is a probability of transmitting or receiving a signal via the RIS 30 in the communication between the base station 10 and the terminal 20.

The PRS measurement results may be, for example, a RSRP or a LOS/NLOS indicator. The LOS/NLOS indicator value "0" may indicate LOS and the value "1" may indicate NLOS, or, conversely, the value "1" may indicate LOS and the value "0" may indicate NLOS.

The RIS involving probability may be defined as a RIS indicator. The RIS indicator may be transmitted from the terminal 20 to the network (for example, the base station 10), or may be transmitted from the network to the terminal 20. The RIS indicator may be a hard value of 0 or 1 (for example, 1-bit indication), or may be indicated as a soft value in a range from 0% to 100%. In a case where the RIS indicator is indicated as a soft value, the soft value may be configured by a unit of 1% or may be configured by a unit of X% (X is a value specified in advance in the technical specification). For example, in a case of X=10, the value in a range from 0% to 100% may be indicated by 11 values (4 bits) of 0, 0.1, 0.2, 0.3, ..., 0.9, and 1.

For example, the terminal 20 may report the determined beam angle to the network.

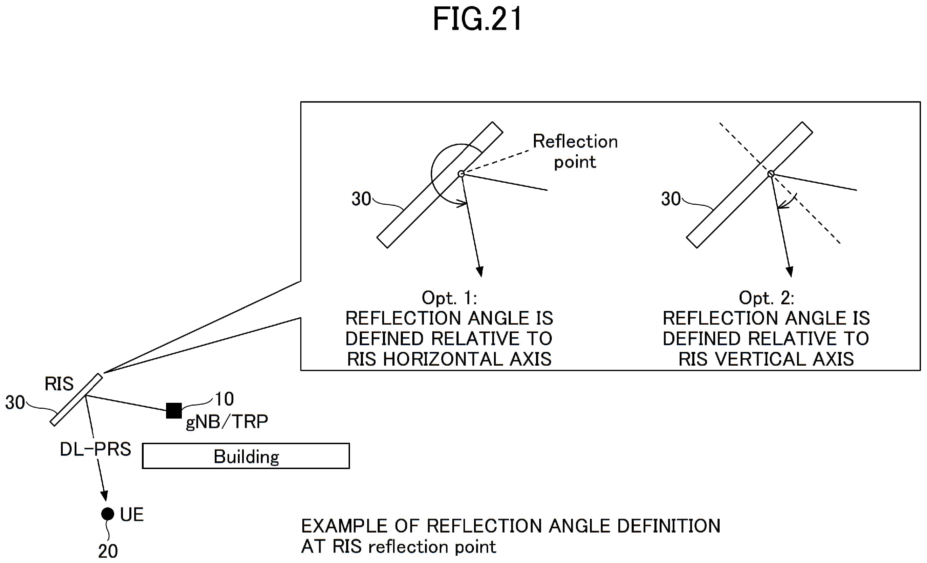

For example, the terminal 20 may estimate the reflection angle at the reflection point on the RIS 30 and may report the estimated reflection angle to the network. The reflection angle at the reflection point on the RIS 30 may be defined relative to the horizontal axis of the RIS 30 as illustrated by opt. 1 in Fig. 21, or may be defined relative to the vertical axis of the RIS 30 as illustrated by opt. 2 in Fig. 21. The horizontal axis of the RIS 30 is axis in the direction parallel to the reflection surface of the RIS 30. The vertical axis of the RIS 30 is axis in the direction vertical to the reflection surface of the RIS 30.

According to the third embodiment, the flexibility of the installation location and configuration of the RIS can be increased and the positioning via the RIS can be performed in the various scenarios.

### (Fourth embodiment)

According to the fourth embodiment, the terminal 20 may report the terminal capability information (UE capability) related to the reflection point of the RIS to the network.

For example, the capability information of the terminal 20 includes the following information items.

1) Information indicating whether or not the RIS reflection point information indicated from the network to the terminal 20 is to be supported
2) Information indicating whether or not a function of determining the RIS reflection point based on the PRS measurement/transmission is to be supported
3) Information indicating whether or not a function of determining the communication involving the RIS based on the PRS measurement result is to be supported
4) Information indicating whether or not the RIS indicator is to be supported

The information indicating the support of the RIS reflection point information may be indicated on a terminal 20 (UE) basis, on a FR (Frequency Range) basis, on a positioning method (for example, TDOA, Multi-RTT) basis, or on a band combination (for example, intra-band (contiguous)/intra-band (non-contiguous)/interband) basis.

The information indicating the support of the RIS indicator may indicate which of the hard value of 0 or 1 (for example, 1 bit) or the soft value in a range from 0% to 100% is supported.

According to the fourth embodiment, the estimation of the RIS reflection point in accordance with the terminal capability can be performed.

The methods described in the above-described embodiments may be not limited to be applied to the positioning using a RIS, and may be applied to the positioning using a repeater.

The PRS described in the above-described embodiments may be a specific RS that can be used for positioning. For example, in a case where a common RS that can be used for positioning is specified in the future wireless communication standards, the above-described embodiments may be applied to the common RS.

In each of the above-described embodiments, the terminal may be referred to as user equipment (UE), a user terminal (UT), a node, or a user node.

In each of the above-described embodiments, the reference point may be referred to as a RIS position, a RIS coordinate, or a RIS reference point.

In each of the above-described embodiments, the reflection point may be referred to as a reflective point, a reflection position, a reflection coordinate, or a reflecting point.

In each of the above-described embodiments, the SRS-pos may be referred to as an SRS for positioning or an SRS.

In each of the above-described embodiments, the assistant data may be referred to as assistant information.

In each of the above-described embodiments, the RIS spot may be referred to as a RIS panel or a RIS block.

In addition, the RIS 30 may perform relaying of communications between a plurality of terminals 20 (for example, sidelink communications). In such cases, the base station 10 may be replaced with the terminal 20 in each of the above-described embodiments.

The wireless relay device and the base station in an embodiment of the present invention may be configured as a wireless relay device and a base station as described in the items below. In addition, a wireless relay method as described below may be performed.

### <Configuration related to an embodiment of the present invention>

### (First item)

A terminal including:
a transmission and reception unit configured to perform transmission and reception of a reference signal used for positioning via a wireless relay device, and to receive information indicating a reflection point at which the reference signal is reflected by the wireless relay device; and
a control unit configured to perform the positioning based on the reflection point in response to reception of the reference signal, wherein
the reflection point is associated with a resource of the reference signal.

### (Second item)

The terminal as described in the first item, wherein
the transmission and reception unit receives information indicating areas on the wireless relay device, the areas being capable of reflecting a signal, and
the control unit performs measurement of reference signals with same resources repeatedly by switching the areas.

### (Third item)

The terminal as described in the first item, wherein
the transmission and reception unit receives a plurality of reference signals,
each of the plurality of reference signals has a different resource, and
the control unit performs measurement for the plurality of reference signals and determines a range on the wireless relay device, signals being reflected in the range, based on results of the measurement.

### (Fourth item)

The transmission and reception unit included in the terminal described in the first item transmits, to a base station, capability information indicating whether or not an operation based on the information indicating the reflection point is supported by the terminal.

### (Fifth item)

A base station including:
a control unit configured to generate a reference signal used for positioning; and
a transmission unit configured to transmit the reference signal used for positioning to a terminal via a wireless relay device and to transmit, to the terminal, information indicating a reflection point at which the wireless relay device reflects the reference signal, wherein
the reflection point is associated with a resource of the reference signal.

### (Sixth item)

A communication method performed by a terminal, the communication method comprising:
receiving a reference signal used for positioning via a wireless relay device;
receiving information indicating a reflection point at which the wireless relay device reflects the reference signal; and
performing the positioning based on the reflection point in response to reception of the reference signal, wherein
the reflection point is associated with a resource of the reference signal.

According to any one of the above-described configurations, the accuracy of positioning using the RIS can be improved. According to the first, fifth, and sixth items, the coordinates (position) of the reflection point of the RIS can be dynamically obtained based on the reflection beam while preventing the increase of the complexity of the base station and the terminal. According to the second item, even in a case where the RIS does not have a reflection point estimation function, the coordinates of the RIS reflection points can be obtained, and thus, the accuracy of the positioning using the RIS can be improved. According to the third item, the flexibility of the installation location and configuration of the RIS can be increased and the positioning using the RIS can be performed in the various scenarios. According to the fourth item, the estimation of the RIS reflection point in accordance with the terminal capability can be performed.

### (Hardware structure)

In the above block diagrams used for describing an embodiment of the present invention (Fig. 2, Fig. 3, and Fig. 4), functional unit blocks are shown. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. The method for implementing each component is not particularly limited as described above.

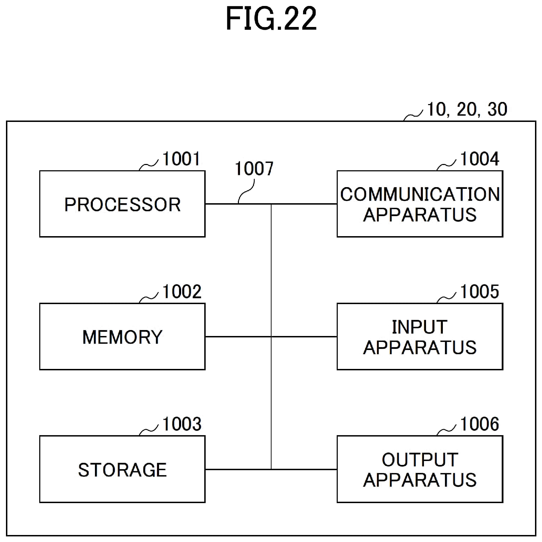

For example, the base station 10, the terminal 20, the RIS 30, etc., according to an embodiment of the present disclosure may function as a computer for processing the wireless communication method of the present disclosure. Fig. 22 is a diagram illustrating an example of a hardware structure of the base station 10, the terminal 20, and the RIS 30 according to an embodiment of the present disclosure. Physically, the above-described base station 10, terminal 20, and RIS 30 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10, the terminal 20, and the RIS 30 may be configured to include one or more of apparatuses shown in the drawings, or may be configured not to include part of apparatuses.

Each function of the base station 10, the terminals 20, and the RIS 30 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may include a central processing unit (CPU) including an interface with a peripheral apparatus, a control apparatus, a calculation apparatus, a register, etc. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 2 may be implemented by control programs that are stored in the memory 1002 and that operate on the processor 1001. In addition, for example, the control unit 240 of the terminal 20 illustrated in Fig. 3 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, and Blu-ray (registered trademark) disk), a smart card, a flash memory (e.g., card, stick, and key drive), a floppy (registered trademark) disk, a magnetic strip, etc. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, and LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10, the terminals 20, and the RIS 30 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

In addition, the RIS 30 may include a variable phase shifter, phase shifter, amplifier, antenna, antenna array, or the like, as the hardware included in the variable unit 340 and the antenna unit 350 depending on the necessity.

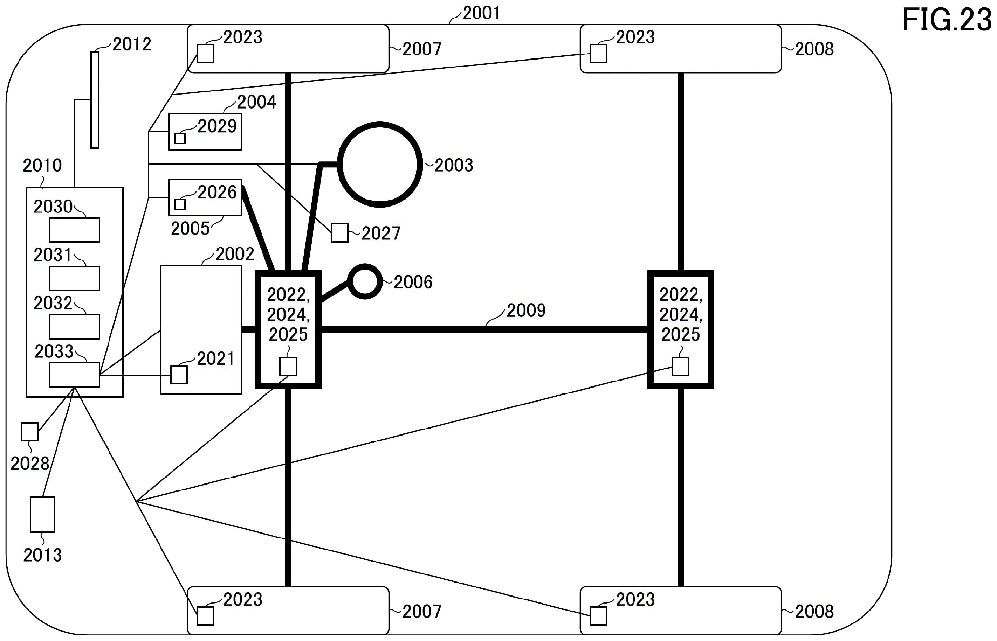

Fig. 23 shows an example of a configuration of a vehicle 2001. As shown in Fig. 23, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above-described embodiments. A person skilled in the art should understand that there are various modifications, variations, alternatives, replacements, etc. of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or more network nodes including the base station 10, it is apparent that the various operations performed for communicating with the terminal 20 may be performed by the base station 10 and another network node other than the base station 10 (for example, the another network node may include, but is not limited to, MME, S-GW, AMF (Access and Mobility management Function), SMF (Session Management Function), LMF (Location Management Function), or the like). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like. Further, the component carrier (CC) may be referred to as a carrier frequency, cell, frequency carrier, or the like. Further, the component carrier (CC) may be referred to as a carrier frequency, cell, frequency carrier, or the like. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station may be a vehicle (e.g., a car, an airplane, etc.), an unmanned mobile body (e.g., a drone, an automated vehicle, etc.), or a robot (manned or unmanned). Note that at least one of a base station or a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database, or another data structure), ascertaining and the like. Also, "determining" may be regarded as receiving (e.g., receiving information), transmitting (e.g., transmitting information), inputting, outputting, accessing (e.g., accessing data in a memory), and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG), " a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for a terminal 20.

At least one of configured BWPs may be active, and a terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Wireless relay device
- 310: Transmission unit
- 320: Reception unit
- 330: Control unit
- 340: Variable unit
- 350: Antenna unit
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a transmission and reception unit configured to perform transmission and reception of a reference signal used for positioning via a wireless relay device and to receive information indicating a reflection point at which the wireless relay device reflects the reference signal; and
a control unit configured to perform the positioning based on the reflection point in response to reception of the reference signal, wherein
the reflection point is associated with a resource of the reference signal.

2. The terminal as claimed in claim 1, wherein
the transmission and reception unit receives information indicating areas on the wireless relay device, the areas being capable of reflecting a signal, and
the control unit performs measurement of reference signals with same resources repeatedly by switching the areas.

3. The terminal as claimed in claim 1, wherein
the transmission and reception unit receives a plurality of reference signals,
each of the plurality of reference signals has a different resource, and
the control unit performs measurement for the plurality of reference signals and determines a range on the wireless relay device, signals being reflected in the range, based on results of the measurement.

4. The terminal as claimed in claim 1, wherein
the transmission and reception unit transmits, to a base station, capability information indicating whether or not an operation based on the information indicating the reflection point is supported by the terminal.

5. A base station comprising:
a control unit configured to generate a reference signal used for positioning; and
a transmission unit configured to transmit the reference signal used for positioning to a terminal via a wireless relay device and to transmit, to the terminal, information indicating a reflection point at which the wireless relay device reflects the reference signal, wherein
the reflection point is associated with a resource of the reference signal.

6. A communication method performed by a terminal, the communication method comprising:
receiving a reference signal used for positioning via a wireless relay device;
receiving information indicating a reflection point at which the wireless relay device reflects the reference signal; and
performing the positioning based on the reflection point in response to reception of the reference signal, wherein
the reflection point is associated with a resource of the reference signal.
